# EUROPÄISCHE PATENTANMELDUNG

(11) **EP 2 001 101 A1**
(43) Veröffentlichungstag der Anmeldung: **10.12.2008**
(21) Anmeldenummer: 07022763.2
(22) Anmeldetag: 23.11.2007
(51) Int. Cl.: H02J 13/00, H01R 25/00

(54) **Vorrichtung zur elektrischen Energieversorgung von mehreren Geräten und Verfahren zum Betreiben**

(30) Priorität: 14.05.2007 DE 102007022906
(71) Anmelder: Cluster Labs GmbH, 13158 Berlin (DE)
(72) Erfinder: Die Erfindernennung liegt noch nicht vor
(74) Vertreter: Bittner, Thomas L.

(57) **Zusammenfassung**

Die Erfindung betrifft eine Vorrichtung zur elektrischen Energieversorgung von mehreren Geräten, insbesondere zur Energieversorgung von Datenverarbeitungseinrichtungen, mit einem Gehäuse (1) und mehreren hieran gebildeten, elektrischen Energieversorgungsanschlüssen (2, 3), die wahlweise als Steckanschlüsse ausgeführt sind und an deren Anschlusskontakten im Betrieb mehrere unterschiedliche elektrische Spannungen bereitgestellt sind, wobei die mehreren elektrischen Energieversorgungsanschlüsse (2, 3) an eine Schalteinrichtung (4) gekoppelt sind, die konfiguriert ist, die Bereitstellung einer jeweils zugeordneten elektrischen Spannung an den Anschlusskontakten ein- und abzuschalten, und wobei an die Schalteinrichtung (4) ein RFID-Modul (7) gekoppelt ist, das konfiguriert ist, Steuersignale zum individuellen Ein- und Abschalten der Bereitstellung der jeweils zugeordneten elektrischen Spannung an den Anschlusskontakten über eine kabellose Datenkommunikationsverbindung zu empfangen und an die Schalteinrichtung (4) weiterzugeben. Des weiteren ist ein Verfahren zum Betreiben der Vorrichtung geschaffen.

## Beschreibung

Die Erfindung bezieht sich auf eine Vorrichtung zur elektrischen Energieversorgung von mehreren Geräten, insbesondere zur Energieversorgung von Datenverarbeitungseinrichtungen, sowie ein Verfahren zum Betreiben der Vorrichtung.

### Hintergrund der Erfindung

Derartige Vorrichtungen zur elektrischen Energieversorgung sind beispielsweise als mobile oder tragbare Steckdosenanordnungen bekannt, die auch als Steckdosenleisten bezeichnet werden können. Üblicherweise verfügen die tragbaren Steckdosen über eine Anordnung von mehreren elektrischen Energieversorgungsanschlüssen in Form von Steckanschlüssen oder Steckeraufnahmen, bei denen über jeweilige Anschlusskontakte eine elektrische Versorgungsspannung zur Verfügung gestellt wird, wahlweise mit verschiedenen Spannungswerten. Eine elektrische Ausgangsspannung erreicht die tragbare Steckdose über eine Versorgungsleitung, die ihrerseits dann am distalen Ende einen Stecker aufweist, der in eine Anschlusssteckdose gesteckt wird. Solche mobilen Steckdosen sind auch in Ausführungen bekannt, bei denen am Gehäuse der mobilen Steckdose ein Schalter zum Ein- und Abschalten der Steckdose vorgesehen ist. Mit Hilfe dieses Schalters können auf einmal sämtliche Anschlusskontakte spannungsfrei geschaltet werden, oder die Spannung kann auf diese Weise bereitgestellt werden.

Steckdosenanordnungen können aber auch fest an einem Ort montiert sein. Beispielhaft können hier die Anordnung in oder auf einer Wand, in einem Gehäuse eines Gerätes oder in einem Schaltschrank oder eine Industrieanlage genannt werden.

### Zusammenfassung der Erfindung

Aufgabe der Erfindung ist es, eine verbesserte Vorrichtung zur elektrischen Energieversorgung von mehreren Geräten sowie ein Verfahren zum Betreiben anzugeben, die für den Benutzer der Vorrichtung den Bedienkomfort erhöhen und gleichzeitig die Anwendungsmöglichkeiten der Vorrichtung erweitern.

Diese Aufgabe wird erfindungsgemäß durch eine Vorrichtung zur elektrischen Energieversorgung von mehreren Geräten nach dem unabhängigen Anspruch 1 sowie ein Verfahren zum Betreiben der Vorrichtung nach dem unabhängigen Anspruch 9 gelöst.

Die Erfindung umfasst insbesondere den Gedanken, eine Vorrichtung zur elektrischen Energieversorgung von mehreren Geräten, insbesondere zur Energieversorgung von Datenverarbeitungseinrichtungen, mit einem RFID-Modul (RFID - "Radiofrequenz Identifikation") auszustatten, welches seinerseits über eine kabellose Datenkommunikationsverbindung basierend auf die RFID-Technologie angesprochen werden kann. Die Vorrichtung ist mit einem Gehäuse und mehreren hieran gebildeten, elektrischen Energieversorgungsanschlüssen ausgestatten, die wahlweise als Steckanschlüsse oder Steckeraufnahmen ausgeführt sind und an deren Anschlusskontakten im Betrieb mehrere unterschiedliche elektrische Spannungen bereitgestellt sind. Die mehreren elektrischen Energieversorgungsanschlüsse sind an eine Schalteinrichtung gekoppelt, die konfiguriert ist, die Bereitstellung einer jeweils zugeordneten elektrischen Spannung an den Anschlusskontakten ein- und abzuschalten. Das vorgesehene RFID-Modul ist an die Schalteinrichtung gekoppelt und konfiguriert, Steuersignale zum individuellen Ein- und Abschalten der Bereitstellung der jeweils zugeordneten elektrischen Spannung an den Anschlusskontakten über die kabellose Datenkommunikationsverbindung zu empfangen und an die Schalteinrichtung weiterzugeben, wahlweise nach vorheriger Bearbeitung der empfangenen Steuersignale. Auf diese Weise ist es ermöglicht, den Betrieb der mehreren elektrischen Energieversorgungsanschlüsse individuell aus der Ferne zu gestalten. Über die kabellose Datenkommunikationsverbindung werden je nach Anwendungszweck und gewünschter Betriebsart Steuersignale an die Vorrichtung zur elektrischen Energieversorgung übermittelt, die dann mit Hilfe des RFID-Moduls und der Schalteinrichtung genutzt werden, um einzelne oder mehrere der elektrischen Energieversorgungsanschlüsse zeitgleich oder zeitversetzt ein- oder abzuschalten.

Für die Datenkommunikation wird die als solche bekannte RFID-Technologie genutzt. Im Rahmen dieser Technologie werden die RFID-Module auch als Transponder bezeichnet. Der Aufbau eines RFID-Transponders sieht prinzipiell eine Antenne, einen analogen Schaltkreis zum Empfangen und Senden (Transceiver) sowie einen digitalen Schaltkreis und einen Speicher vor, der vorzugsweise als permanenter Speicher ausgeführt ist. RFID-Transponder oder - Module können über einen mehrfach beschreibbaren Speicher verfügen, in den während der Lebensdauer Informationen abgelegt werden können. Nach Anwendungsgebiet unterscheiden sich die Kennzahlen der verwendeten Module, beispielsweise Funkfrequenz, Übertragungsrage, Lebensdauer oder dergleichen. Derartige Kennzahlen können je nach Anwendungsgebiet ausgewählt werden.

Das RFID-Modul kann darüber hinaus konfiguriert sein, beliebige elektronische Informationen betreffend die Vorrichtung zur elektrischen Energieversorgung oder deren Einsatzumstände zu empfangen, zu speichern und wahlweise wieder abzugeben. Beispielsweise kann so Inventarisierungsinformation verarbeitet werden, beispielsweise zur Warenwirtschaft.

Eine bevorzugte Weiterbildung der Erfindung sieht vor, dass an dem Gehäuse ein PoE-Anschluss (PoE - *"Power over Ethernet"*) mit einem nachgeschalteten PoE-Switch gebildet ist, welcher an die Schalteinrichtung gekoppelt und konfiguriert ist, weitere Steuersignale zum individuellen Ein- und Abschalten der Bereitstellung der jeweils zugeordneten elektrischen Spannung an den Anschlusskontakten über eine kabelgebundene Ethernet-Datenkommunikationsverbindung zu empfangen und an die Schalteinrichtung weiterzugeben. Zusätzlich zu der individuellen Schaltbarkeit der mehreren elektrischen Energieversorgungsanschlüsse mittels Datenkommunikation über RFID-Technologie ist so ein getrenntes Ein- und Abschalten der elektrischen Energieversorgungsanschlüsse mittels einer kabelgebundenen Ethernet-Datenkommunikation ermöglicht. Die als solche bekannte Ethernet-Technologie kann hierbei in ihren verschiedensten Ausgestaltungen genutzt werden.

Als eine Technologie für datentechnische Netzwerke wurde das Ethernet entwickelt. Es wird insbesondere für lokale Datennetzwerke (LAN - *"Local Area Network"*) genutzt. Ethernet ermöglicht den Datenaustausch in Form von Datenrahmen zwischen allen an einem Datennetzwerk angeschlossenen Datenverarbeitungseinrichtungen. Die Ethernet-Technologie verbindet hierbei heute auch Datenverarbeitungseinrichtungen über weite Entfernungen. Es gibt verschiedene Standards innerhalb der Ethernet-Technologie. So gehört dazu auch der Ethernet-Standard IEEE 802.3af. Dieser Standard beschreibt ein Verfahren, wie sich ethernetfähige Datenverarbeitungseinrichtungen über ein Twisted-Pair-Kabel mit Energie versorgen lassen. Hierbei werden entweder die ungenutzten Adern der Leitung verwendet oder es wird zusätzlich zum Datensignal ein Gleichstromanteil über die vier verwendeten Adern übertragen. Entsprechend ausgelegte Datenverarbeitungseinrichtungen werden mit 48V und bis zu 15,4W versorgt. Mittels Logikeinrichtungen wird verhindert, dass Geräte mit Energie versorgt werden, die nicht in der Lage sind, PoE zu nutzen.

Bei einer zweckmäßigen Ausgestaltung der Erfindung kann vorgesehen sein, dass Schalteinrichtung konfiguriert ist, die Bereitstellung der jeweils zugeordneten elektrischen Spannung an den Anschlusskontakten gemäß den weiteren Steuersignalen nur individuell ein- und abzuschalten, wenn zusätzlich eine Freigabe des Ein- und Abschaltens von dem RFID-Modul vorliegt. Mit Hilfe dieser Ausführungsform ist eine Priorität der Steuerung über das RFID-Modul gegenüber der wahlweise zusätzlich vorgesehenen Steuerbarkeit des Ein- und Abschaltens der elektrischen Energieversorgungsanschlüsse über Ethernet-Datenkommunikation gegeben. Dieses kann beispielsweise dadurch umgesetzt sein, dass die Schalteinrichtung beim Empfangen von weiteren Steuersignalen von dem PoE-Switch stets aktiv eine Anfrage an das RFID-Modul sendet und um Freigabe des Ein- oder Abschaltens von elektrischen Energieversorgungsanschlüssen gemäß den weiteren Steuersignalen bittet. Hierauf kann das RFID-Modul entweder umgehend antworten oder zunächst eine entsprechende Anfrage an eine Zentrale über die kabellose Datenkommunikationsverbindung stellen, um anschließend in Abhängigkeit von der hierauf erhaltenen Antwort eine entsprechende elektronische Nachricht an die Schalteinrichtung zu übermitteln. Alternativ kann vorgesehen sein, dass in der Schalteinrichtung proaktiv eine elektronische Information vorliegt, ob ein Ein- oder Abschalten der elektrischen Energieversorgungsanschlüsse gemäß den weiteren Steuersignalen generell erlaubt oder verboten ist.

Eine vorteilhafte Ausführungsform der Erfindung sieht vor, dass das RFID-Modul konfiguriert ist, in Verbindung mit einem Signalaustausch über die kabellose Datenkommunikationsverbindung, welcher wahlweise das Empfangen der Steuersignale umfasst, einen Authentifizierungsprozess auszuführen. Im Rahmen der RF>D-Technologie sind Authentifizierungs- oder Zertifizierungsprozeduren in verschiedenen Ausgestaltungen bekannt. Sie dienen im allgemeinen zur Etablierung bestimmter Sicherheitsstandards, um einen unberechtigten Zugriff zu vermeiden, was im vorliegenden Fall verhindert, dass das Ein- und Abschalten der elektrischen Energieversorgungsanschlüsse von Unberechtigten veranlasst wird. Auf diese Weise wird insgesamt der Sicherheitsstandard verbessert.

Bevorzugt sieht eine Fortbildung der Erfindung vor, dass die mehreren elektrischen Energieversorgungsanschlüsse an eine Wandlereinrichtung gekoppelt sind, die an eine externe Versorgungsleitung angeschlossen ist und für die mehreren elektrischen Energieversorgungsanschlüsse elektrische Spannungen mit wenigstens zwei Spannungswerten ausgewählt aus der folgenden Gruppe von Spannungswerten bereitstellt: 48V, 110V, 230V und 400V. Die Wandlereinrichtung, bei der es sich beispielsweise um einen Transformator handelt, kann je nach gewünschtem Anwendungszweck ausgewählt werden, um die geforderten Spannungen bereitzustellen.

Bei einer vorteilhaften Ausgestaltung der Erfindung kann vorgesehen sein, dass an dem Gehäuse mehrere Ethernet-Anschlüsse gebildet sind. Mit Hilfe von Ethernet-Anschlüssen ist eine Netzwerktauglichkeit der Vorrichtung hergestellt, so dass die Vorrichtung zur elektrischen Energieversorgung in ein Ethernet-Netzwerk datentechnisch eingebunden werden kann, was den Austausch von elektronischen Daten zwischen der Vorrichtung und anderen ethernetfähigen Geräten ermöglicht. Hierzu gehören beispielsweise Telefonanlagen, insbesondere VoIP-Telefone (VoIP - "*Voice over IP*"), Computer und andere Datenverarbeitungseinrichtungen wie Drucker, Bildschirme oder andere Bürogeräte. Mittels des Ethernet-Anschlusses kann dann auch beliebige über das RFID-Modul erhaltenen Information ausgewertet werden, so dass zwei unabhängige Datenkommunikations-Netzwerke betreffend jegliche elektronische Informationen nutzbar sind, die in der Vorrichtung vorhanden sind, sei es von vornherein oder nach Empfang während des Betriebes..

Eine Weiterbildung der Erfindung kann vorsehen, dass das Gehäuse als ein Einbaumodul ausgeführt ist. Solche Einbaumodule kommen beispielsweise in Schrankanlagen oder Kabelschächten zum Einsatz.

Eine bevorzugte Weiterbildung der Erfindung sieht vor, dass das Gehäuse als eine modulare Steckdose ausgeführt ist, wahlweise in Form einer mobilen Steckdosenleiste.

Bei einer vorteilhaften Ausgestaltung der Erfindung kann vorgesehen sein, dass ein oder mehrere, an die mehreren elektrischen Energieversorgungsanschlüsse gekoppelte Stromverbrauchsmesseinrichtungen gebildet sind. In diesem Zusammenhang werden beispielsweise elektrische Widerstände verwendet, die in dem Gehäuse gebildet sind und in der zugehörigen Zuführleitung zu dem Energieversorgungsanschluss angeordnet sind. Hiermit erfasste Messwerte für den elektrischen Strom können dann über Ethernet-Anschlüsse in Form von elektronischen Daten nach außen gegeben werden und dort in beliebiger Art und Weise verarbeitet werden.

Nachfolgend werden vorteilhafte Ausgestaltungen des Verfahrens zum Betreiben der Vorrichtung zur elektrischen Energieversorgung von mehreren Geräten erläutert. Die zweckmäßigen Verfahrensausführungen entfalten die im Zusammenhang mit den gleichartigen Ausgestaltungen der Vorrichtung genannten Vorteile entsprechend.

Bei einer zweckmäßigen Ausgestaltung des Verfahrens können die weiteren Schritte vorgesehen sein: Empfangen von weiteren Steuersignalen an einem PoE-Anschluss mit einem nachgeschalteten PoE-Switch über eine kabelgebundene Ethemet-Datenkommunikationsverbindung; Weitergeben der empfangenen weiteren Steuersignale, wahlweise nach vorheriger Bearbeitung, von dem nachgeschalteten PoE-Switch an die hieran gekoppelte Schalteinrichtung und individuelles Ein- und Abschalten der Bereitstellung der jeweils zugeordneten elektrischen Spannung an den Anschlusskontakten gemäß den weiteren Steuersignalen durch die Schalteinrichtung.

Eine vorteilhafte Ausführungsform der Erfindung sieht vor, dass die Schalteinrichtung die Bereitstellung der jeweils zugeordneten elektrischen Spannung an den Anschlusskontakten gemäß den weiteren Steuersignalen nur individuell ein- und abschaltet, wenn zusätzlich eine Freigabe des Ein- und Abschaltens von dem RFID-Modul vorliegt.

Bevorzugt sieht eine Fortbildung der Erfindung vor, dass das RFID-Modul in Verbindung mit einem Signalaustausch über die kabellose Datenkommunikationsverbindung, welcher wahlweise das Empfangen der Steuersignale umfasst, einen Authentifizierungsprozess ausführt.

### Beschreibung bevorzugter Ausführungsbeispiele der Erfindung

Die Erfindung wird im folgenden anhand von Ausführungsbeispielen unter Bezugnahme auf eine Figur näher erläutert.

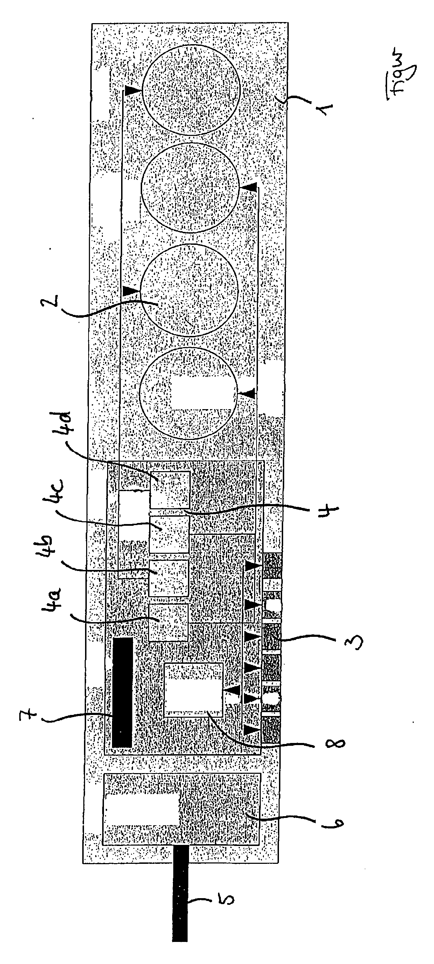

Die einzige Figur zeigt eine schematische Darstellung einer Vorrichtung zur elektrischen Energieversorgung von mehreren Geräten, insbesondere zur Energieversorgung von Datenverarbeitungseinrichtungen, mit einem Gehäuse 1, an welchem mehrere elektrische Energieversorgungsanschlüsse gebildet sind. Hierzu gehören mehrere als Einsätze oder Aufnahmen ausgeführte Steckdosen 2 sowie mehrere PoE-Anschlüsse 3 (PoE - "*Power over Ethernet*"). Über Anschlusskontakte der Steckdosen 2 wird jeweils eine elektrische Spannung mit einem Spannungswert von 230V oder 110V zur Verfügung gestellt. Demgegenüber ist an den PoE-Anschlüssen 3 eine elektrische Spannung mit einem Spannungswert von 48V bereitgestellt, wie sie für PoE üblich ist. Sowohl die Steckdosen 2 als auch die PoE-Anschlüsse 3 sind an eine Schalteinrichtung 4 gekoppelt, die insbesondere ein oder mehrere Schaltrelais 4a, ..., 4d umfasst. Mit Hilfe der Schalteinrichtung 4 können die Steckdosen 2 und die PoE-Anschlüsse 3 individuell und getrennt voneinander einzeln oder in Gruppen zeitgleich oder zeitversetzt ein- und abgeschalten werden, so dass die jeweils zugeordnete elektrische Spannung entweder anliegt oder nicht. Die Schalteinrichtung 4 ist zweckmäßigerweise auf einer Leiterplatte gebildet, die darüber hinaus wahlweise die weiteren elektrischen oder elektronischen Bauelemente zur Implementierung trägt.

Der Anschluss an ein Spannungsversorgungsnetz erfolgt über eine Kabelverbindung 5, die ihrerseits zu einer Wandlereinrichtung 6 führt, die konfiguriert ist, die je nach Anwendungszweck gewünschten Spannungen zur Verfügung zu stellen. Transformatoren zur Implementierung der Wandlereinrichtung 6 sind in verschiedenen Ausgestaltungen bekannt und können den jeweils gewünschten Spannungswerten entsprechend ausgewählt werden.

Die Vorrichtung umfasst gemäß der Figur weiterhin ein RFID-Modul 7, welches seinerseits an die Schalteinrichtung 4 gekoppelt ist. Mittels des RFID-Moduls 7 können über eine kabellose Datenkommunikationsverbindung von einem entsprechenden RFID-Sender Steuersignale empfangen werden, die den Betrieb der Vorrichtung zur elektrischen Energieversorgung betreffen. Insbesondere gehören zu diesen Steuersignalen Signale, die zum Zwecke eines individuellen Ein- und Abschaltens der Steckdosen 2 und / oder der PoE-Anschlüsse 3 dienen. Beim Empfangen derartiger Steuersignale gibt das RFID-Modul 7 diese, wahlweise nach vorheriger Bearbeitung, an die Schalteinrichtung 4 weiter, so dass die Schalteinrichtung 4 dann den empfangenen Steuersignalen entsprechend die Steckdosen 4 und / oder die PoE-Anschlüsse 3 ein- oder abschaltet, das heißt an den zugehörigen Anschlusskontakten wird die zugeordnete elektrische Spannung entweder bereitgestellt oder nicht.

Ein Ein- und Abschalten der Steckdosen 2 und / oder der PoE-Anschlüsse 3 ist in gleicher Weise mittels Datenkommunikation über ein Ethernet-Netzwerk möglich, welches über die PoE-Anschlüsse 3 angeschlossen werden kann. Es kann auch vorgesehen sein, dass einige der dargestellten PoE-Anschlüsse 3 als normale Ethernet-Anschlüsse ausgeführt sind, über die dann auch ein Netzwerkanschluss ermöglicht ist. Nachgeschaltet ist ein PoE-Switch 8 vorgesehen, der seinerseits an die Schalteinrichtung 4 gekoppelt ist, um die über Ethernet-Datenkommunikation erhaltenen Steuersignale zum Ein- und Abschalten der elektrischen Versorgungsanschlüsse weiterzugeben, gegebenenfalls nach vorheriger Bearbeitung. Auf diese Weise ist sowohl über die Nutzung der RFID-Technologie als auch der Ethernet-Technologie eine Fernsteuerung des Schaltzustandes der Steckdosen 2 und der PoE-Anschlüsse 3 mit ihren jeweiligen Spannungen ermöglicht.

Es kann weiterhin vorgesehen sein, in der Vorrichtung zur elektrischen Energieversorgung für die Steckdosen 4 und / oder die PoE-Anschlüsse 3 einen Stromverbrauch individuell zu erfassen. Hierzu ist in einer Ausgestaltung den Schaltrelais 4a, ..., 4d zu Messzwecken des Stromverbrauchs ein jeweiliger elektrischer Widerstand (nicht dargestellt) vorgeschaltet. Eine Information über die erfassten Verbrauchswerte kann dann über die Ethernet-Anschlüsse an ein Datennetzwerk gegeben werden zur Auswertung, beispielsweise zu einem Systemmanagement.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung zur elektrischen Energieversorgung von mehreren Geräten, insbesondere zur Energieversorgung von Datenverarbeitungseinrichtungen, mit einem Gehäuse (1) und mehreren hieran gebildeten, elektrischen Energieversorgungsanschlüssen (2, 3), die wahlweise als Steckanschlüsse ausgeführt sind und an deren Anschlusskontakten im Betrieb mehrere unterschiedliche elektrische Spannungen bereitgestellt sind, wobei die mehreren elektrischen Energieversorgungsanschlüsse (2, 3) an eine Schalteinrichtung (4) gekoppelt sind, die konfiguriert ist, die Bereitstellung einer jeweils zugeordneten elektrischen Spannung an den Anschlusskontakten ein- und abzuschalten, und wobei an die Schalteinrichtung (4) ein RFID-Modul (7) gekoppelt ist, das konfiguriert ist, Steuersignale zum individuellen Ein- und Abschalten der Bereitstellung der jeweils zugeordneten elektrischen Spannung an den Anschlusskontakten über eine kabellose Datenkommunikationsverbindung zu empfangen und an die Schalteinrichtung (4) weiterzugeben.

2. Vorrichtung nach Anspruch 1, **dadurch gekennzeichnet, dass** an dem Gehäuse (1) ein PoE-Anschluss (3) mit einem nachgeschalteten PoE-Switch (8) gebildet ist, welcher an die Schalteinrichtung (4) gekoppelt und konfiguriert ist, weitere Steuersignale zum individuellen Ein- und Abschalten der Bereitstellung der jeweils zugeordneten elektrischen Spannung an den Anschlusskontakten über eine kabelgebundene Ethernet-Datenkommunikationsverbindung zu empfangen und an die Schalteinrichtung (4) weiterzugeben.

3. Vorrichtung nach Anspruch 1 oder 2, **dadurch gekennzeichnet, dass** Schalteinrichtung (4) konfiguriert ist, die Bereitstellung der jeweils zugeordneten elektrischen Spannung an den Anschlusskontakten gemäß den weiteren Steuersignalen nur individuell ein- und abzuschalten, wenn zusätzlich eine Freigabe des Ein- und Abschaltens von dem RFID-Modul (7) vorliegt.

4. Vorrichtung nach einem der vorangehenden Ansprüche, **dadurch gekennzeichnet, dass** das RFID-Modul (7) konfiguriert ist, in Verbindung mit einem Signalaustausch über die kabellose Datenkommunikationsverbindung, welcher wahlweise das Empfangen der Steuersignale umfasst, einen Authentifizierungsprozess auszuführen.

5. Vorrichtung nach einem der vorangehenden Ansprüche, **dadurch gekennzeichnet, dass** die mehreren elektrischen Energieversorgungsanschlüsse an eine Wandlereinrichtung (6) gekoppelt sind, die an eine externe Versorgungsleitung (5) angeschlossen ist und für die mehreren elektrischen Energieversorgungsanschlüsse (2, 3) elektrische Spannungen mit wenigstens zwei Spannungswerten ausgewählt aus der folgenden Gruppe von Spannungswerten bereitstellt: 48V, 110V, 230V und 400V.

6. Vorrichtung nach einem der vorangehenden Ansprüche, **dadurch gekennzeichnet, dass** an dem Gehäuse (1) mehrere Ethernet-Anschlüsse gebildet sind.

7. Vorrichtung nach einem der vorangehenden Ansprüche, **dadurch gekennzeichnet, dass** das Gehäuse (1) als ein Einbaumodul ausgeführt ist.

8. Vorrichtung nach einem der Ansprüche 1 bis 6, **dadurch gekennzeichnet, dass** das Gehäuse (1) als eine modulare Steckdose ausgeführt ist, wahlweise in Form einer mobilen Steckdosenleiste.

9. Vorrichtung nach einem der vorangehenden Ansprüche, **dadurch gekennzeichnet, dass** ein oder mehrere, an die mehreren elektrischen Energieversorgungsanschlüsse (2, 3) gekoppelte Stromverbrauchsmesseinrichtungen gebildet sind.

10. Verfahren zum Betreiben einer Vorrichtung zur elektrischen Energieversorgung von mehreren Geräten, insbesondere zur Energieversorgung von Datenverarbeitungseinrichtungen, mit einem Gehäuse (1) und mehreren hieran gebildeten, elektrischen Energieversorgungsanschlüssen (2, 3), die wahlweise als Steckanschlüsse ausgeführt sind, wobei das Verfahren die folgenden Schritte umfasst:
- Bereitstellen von mehreren unterschiedlichen elektrischen Spannungen an Anschlusskontakten der mehreren elektrischen Energieversorgungsanschlüsse (2, 3),
- Empfangen von Steuersignalen über eine kabellose Datenkommunikationsverbindung durch ein RFID-Modul (7),
- Weitergeben der empfangenen Steuersignale, wahlweise nach vorheriger Bearbeitung, von dem RFID-Modul (7) an eine hieran gekoppelte Schalteinrichtung (4) und
- individuelles Ein- und Abschalten der Bereitstellung einer jeweils zugeordneten elektrischen Spannung an den Anschlusskontakten gemäß den Steuersignalen durch die Schalteinrichtung (4).

11. Verfahren nach Anspruch 10, **gekennzeichnet durch** die weiteren Schritte:
- Empfangen von weiteren Steuersignalen an einem PoE-Anschluss (3) mit einem nachgeschalteten PoE-Switch (8) über eine kabelgebundene Ethernet-Datenkommunikationsverbindung,
- Weitergeben der empfangenen weiteren Steuersignale, wahlweise nach vorheriger Bearbeitung, von dem nachgeschalteten PoE-Switch (8) an die hieran gekoppelte Schalteinrichtung (4) und
- individuelles Ein- und Abschalten der Bereitstellung der jeweils zugeordneten elektrischen Spannung an den Anschlusskontakten gemäß den weiteren Steuersignalen **durch** die Schalteinrichtung (4).

12. Verfahren nach Anspruch 11, **dadurch gekennzeichnet, dass** die Schalteinrichtung (4) die Bereitstellung der jeweils zugeordneten elektrischen Spannung an den Anschlusskontakten gemäß den weiteren Steuersignalen nur individuell ein- und abschaltet, wenn zusätzlich eine Freigabe des Ein- und Abschaltens von dem RFID-Modul (7) vorliegt.

13. Verfahren nach einem Ansprüche 10 bis 12, **dadurch gekennzeichnet, dass** das RFID-Modul (7) in Verbindung mit einem Signalaustausch über die kabellose Datenkommunikationsverbindung, welcher wahlweise das Empfangen der Steuersignale umfasst, einen Authentifizierungsprozess ausführt.

14. Verfahren nach einem Ansprüche 10 bis 13, **dadurch gekennzeichnet, dass** für die mehreren elektrischen Energieversorgungsanschlüsse (2, 3) ein Stromverbrauch mittels einer oder mehrerer Stromverbrauchsmesseinrichtungen erfasst wird.
